(19)

Europäisches
Patentamt
European
Patent Office
Office européen
des brevets

(11) **EP 1 942 591 A2**

(12) **EUROPEAN PATENT APPLICATION**

(43) Date of publication:
**09.07.2008 Bulletin 2008/28**

(51) Int Cl.:
***H04B 17/00*** *(2006.01)*

(21) Application number: **07024878.6**

(22) Date of filing: **21.12.2007**

| | |
|---|---|
| (84) Designated Contracting States:<br>**AT BE BG CH CY CZ DE DK EE ES FI FR GB GR**<br>**HU IE IS IT LI LT LU LV MC MT NL PL PT RO SE**<br>**SI SK TR**<br>Designated Extension States:<br>**AL BA HR MK RS**<br><br>(30) Priority: **05.01.2007 US 878900 P**<br>　　　　　　 **26.09.2007 US 862010**<br><br>(71) Applicant: **Industrial Technology Research**<br>　　　　**Institut**<br>　　　　**Chutung Hsinchu 310 (TW)** | (72) Inventors:<br>　• **Fu, I-Kang**<br>　　**East District,**<br>　　**Hsinchu City 300 (TW)**<br>　• **Sheen, Wern-Ho**<br>　　**Minsyong Township,**<br>　　**Chiayi County 621 (TW)**<br><br>(74) Representative: **Marchand, André et al**<br>　　**OMNIPAT,**<br>　　**24 Place des Martyrs de la Résistance**<br>　　**13100 Aix-en-Provence (FR)** |

(54) **Methods for interference measurement and prediction**

(57)　　A method of providing wireless communication, the method including providing a wireless communication network having a plurality of stations, the plurality of stations having a plurality of communication links, each communication link being between two of the plurality of stations, transmitting a signal from at least one of the stations to other stations, measuring signal quality associated with at least one of the communication links based on the signal to generate a measuring result, and determining an interference level associated with at least one of the communication links based on the measuring result.

FIG. 10

EP 1 942 591 A2

**Description**

BACKGROUND OF THE INVENTION

The present invention relates to a method of providing wireless communication. More particularly, the present invention relates to a method for interference measurement and prediction in a wireless communication network.

In radio relay systems, the coverage extension and user throughput enhancement may be achieved at the expense of system capacity. The user data in relay links may carry the same information as the data in access links. As a result, the traffic in the relay links is treated as overhead when calculating the system capacity. If the improvement of the system capacity by higher signal quality and transmission rate cannot compensate for the loss of the system capacity due to resource reservation for the relay links, the overall system capacity may be degraded when deploying relay stations (RSs) into the network.

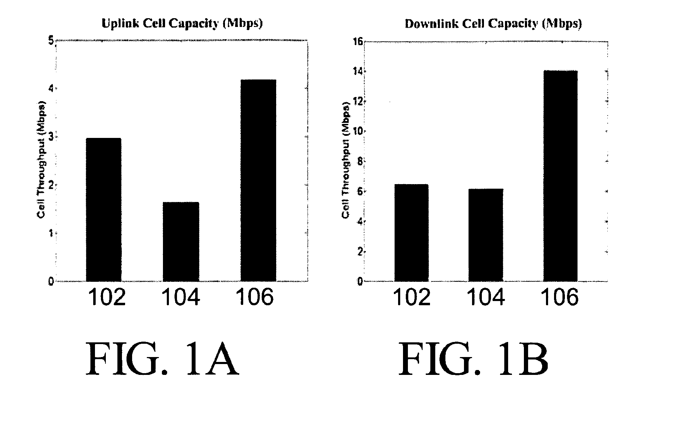

In order to increase the system capacity, reusing radio resources, such as a communication path associated with certain frequency channel and symbol time, in different relay or access links may be an efficient solution. FIG. 1A is a diagram illustrating a simulation result of cell throughputs with different uplink cell capacities of different relay scenarios, and FIG. 1B is a diagram illustrating a simulation result of the cell throughputs with different downlink cell capacities of the different relay scenarios. Referring to FIG. 1A and FIG. 1B, a scenario 102 uses no relay, while scenarios 104 and 106 are with different relays. Compared with the case without relaying, the simulation result in FIG. 1A and FIG. 1B may provide improved overall system capacity such that the cell throughput may be improved by using an efficient relay scenario such as the scenario 106. By sharing resources, the performance improvements include lower handover frequency, less control overhead or higher trunking efficiency may be achievable. However, how to design a topology or which links to reuse or share the same radio resource may become a problem to a designer. As shown in FIG. 1A and FIG. 1B for the scenario 104, although the relay is applied, the performance or the cell throughputs may still be degraded compared with the scenario 102 which applies no relay.

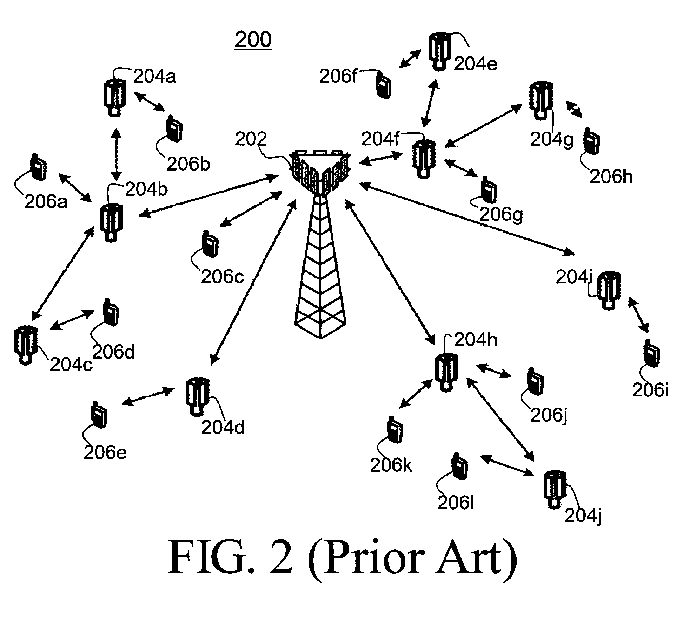

FIG. 2 is a diagram illustrating a radio relay network 200 with a given topology according to an example of the prior art. Referring to FIG. 2, the radio relay network 200 may comprise a base station BS, a plurality of relay stations such as relay stations $RS_1$ to $RS_{10}$ and a plurality of mobile stations MSs. A determination of which relay or access links to be designated to reuse the radio resources of the radio relay network 200 may be important since the system performance may be degraded by unexpected interference if reusing the same resource in a reuse scenario. An example of the prior art may provide a solution having a system operator to perform a coverage and interference planning before deploying the base station BS in the relay network 200. To this end an experienced engineer may be needed for deploying the base station BS and relay stations $RS_1$ to $RS_{10}$ in the radio relay network 200 and configuring the resource reuse scenario manually. However, similar planning may be needed again when reconfiguring the radio relay network 200, and this may make dynamical reconfiguration of a radio relay network expensive and/or difficult. It may therefore be desirable to have a method for measuring or predicting the interference or signal-to-interference-plus-noise ratio (SINR) in advance for the network configuration.

For reusing the network resource, examples of planning, allocation or channel selection method or apparatus of the prior art may be proposed in U.S. patents such as U.S. Pat. No. 6,694,141, entitled "Channel Selection in a Radio Link System," to *Pulkkinen, et al.,* U.S. Pat. No. 6,597,671, entitled "Allocation Method and Apparatus for Reusing Network Resources in a Wireless Communication System," to *Ahmadi, et al.* and U.S. Pat. No. 6,253,086, entitled "Adaptive Frequency Planning in a Cellular Network," to *Parantainen, et al.* However, these examples may not be applicable to a relay topology.

Moreover, regardless of all serving stations are equipped with omnidirectional antennas, a base station or a relay station may be idled for some time in a radio relay network, and thus the transmission efficiency thereof may not be ideal. It may therefore be desirable to have a method for measuring and predicting the interference/SINR in a relay network to choose a topology with improved performances such as less interference, higher transmission efficiency or cell capacity of the radio relay system.

BRIEF SUMMARY OF THE INVENTION

Examples of the present invention may provide a method of providing wireless communication. The method may comprise providing a wireless communication network having a plurality of stations, the plurality of stations having a plurality of communication links, each communication link being between two of the plurality of stations, transmitting a signal from at least one of the stations to other stations, measuring signal quality associated with at least one of the communication links based on the signal to generate a measuring result, and determining an interference level associated with at least one of the communication links based on the measuring result.

According to one embodiment, the method further comprises reporting measured results to a coordinator of the wireless communication network, the coordinator being at least one of base stations and relay stations in the wireless communication network.

According to one embodiment, the determining an interference level associated with at least one of the communication links based on the measuring result comprises determining a signal-to-interference-plus-noise ratio (SINR) associated with at least one of the communication links based on the measuring result.

According to one embodiment, the determining a signal-to-interference-plus-noise ratio associated with at least one of the communication links based on the measuring result comprises determining a ratio of a nominator and a denominator, wherein the nominator includes the received signal strength at a receiving station from at least one other station whose transmission target is the receiving station; and the denominator includes the interference level associated with the at least one of the communication links for the receiving station.

According to one embodiment, the method further comprises arranging a network topology or a network channel reuse scenario based on the measuring result.

According to one embodiment, the signal is a reference signal.

According to one embodiment, wherein the signal quality includes received signal strength (RSS).

According to one embodiment, the coordinator of the wireless communication network manages a measurement procedure for at least a subset of the stations in the wireless communication network by designating the at least one of the stations to transmit the signal to other stations and designating the other stations to measuring the signal quality associated with at least one of the communication links based on the signal to generate the measuring result.

According to one embodiment, the wireless communication network is a radio relay network.

According to one embodiment, the coordinator requests at least one of the stations to transmit different signals for measuring received signal strengths by at least one of the other stations.

According to one embodiment, the measuring result includes received signal strengths measured by at least one of the other stations and corresponding station identifications (IDs).

According to one embodiment, a prediction of the interference level for a receiving station includes at least one of thermal noise, background interference, and received signal strength at the station from the other stations whose transmission target is not the station and are using a same communication channel as the station.

Some examples of the present invention may provide a method of predicting transmission quality of wireless communication links. The method may comprise providing a wireless communication network having a plurality of stations, the plurality of stations providing the communication links among the stations, each communication link being between two of the plurality of stations, transmitting a reference signal from at least one of the stations to other stations, measuring signal quality associated with at least one of the communication links based on the reference signal to generate measuring results, and determining an interference level associated with at least one of the communication links based on the measuring results.

According to one embodiment, the method further comprises identifying an identification of the at least one of the stations transmitting the reference signal.

Other examples of the present invention may provide a method of configuring reuse of radio communication links. The method may comprise providing a wireless communication network having a plurality of stations, the plurality of stations providing the communication links among the stations, each communication link being between two of the plurality of stations, transmitting one signal from at least one of the stations to other stations, measuring signal quality associated with at least one of the communication links based on the signal to generate measuring results, and configuring at least one network channel reuse scenario based on the measuring results.

According to one embodiment, the method further comprises configuring a network topology and radio parameters based on the measuring results.

According to one embodiment, the method further comprises determining an interference level associated with at least one of the communication links based on the measuring results.

Still other examples of the present invention may provide a method of predicting a signal-to-interference-plus-noise ratio (SINR) associated with at least one of a plurality of communication links. The method may comprise providing a wireless communication network having a plurality of stations, the plurality of stations providing the communication links among them, each communication link being between two of the plurality of stations, transmitting one signal from one or more of the stations to other stations, measuring signal quality associated with at least one of the communication links based on the signal to generate measuring results, and determining a signal-to-interference-plus-noise ratio associated with at least one of the communication links based on the measuring results.

According to one embodiment, the method further comprises determining an interference level associated with at least one of the communication links based on the measuring results.

According to one embodiment, determining the signal-to-interference-and-noise ratio associated with at least one of the communication links is based on a ratio of a nominator and denominator, wherein the nominator includes the received signal strength at a receiving station from at least one other station whose transmission target is the station; and the denominator includes an interference level associated with the at least one of the communication links for the receiving station.

According to one embodiment, a prediction of the interference level for a receiving station includes at least one of thermal noise, background interference, and received signal strength at the station from other stations whose transmission target is not the station and are using a same communication channel as the station.

Additional features and advantages of the present invention will be set forth in part in the description which follows, and in part will be obvious from the description, or may be learned by practice of the invention. The features and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

BRIEF DESCRIPTION OF THE SEVERAL VIEWS OF THE DRAWINGS

The foregoing summary, as well as the following detailed description of the invention, will be better understood when read in conjunction with the appended drawings. For the purpose of illustrating the invention, there are shown in the drawings examples which are presently preferred. It should be understood, however, that the invention is not limited to the precise arrangements and instrumentalities shown.

In the drawings:

FIG. 1A is a diagram illustrating a simulation result of cell throughputs with different uplink cell capacities of different relay scenarios;

FIG. 1B is a diagram illustrating a simulation result of the cell throughputs with different downlink cell capacities of the different relay scenarios;

FIG. 2 is a diagram illustrating a radio relay network 200 with a given topology according to an example of the prior art;

FIG. 3 is a diagram illustrating a measuring method according to an example of the present invention;

FIG. 4 is a diagram illustrating a method of applying a designated time-frequency region in a frame duration for a station to transmit a reference signal according to an example of the present invention;

FIG. 5 is a diagram illustrating a method of applying a designated time-frequency region for a station to transmit station-specific reference signals according to an example of the present invention;

FIG. 6 is a diagram illustrating the interference and SINR prediction of a network for each possible resource reuse scenario according to an example of the present invention;

FIG. 7 is a diagram illustrating a set of RSS information in a radio relay network according to an example of the present invention;

FIG. 8A is a diagram illustrating an interference and SINR prediction under a topology according to an example of the present invention;

FIG. 8B is a diagram illustrating the topology in FIG. 8A;

FIG. 9A is a diagram illustrating an interference and SINR prediction under a topology according to another example of the present invention;

FIG. 9B is a diagram illustrating the topology in FIG. 9A;

FIG. 10 is a flowchart illustrating a method of providing wireless communication according to an example of the present invention;

FIG. 11 is a flowchart illustrating a method of predicting transmission quality of wireless communication links according to an example of the present invention;

FIG. 12 is a flowchart illustrating a method of arranging reuse of radio communication links according to an example of the present invention; and

FIG. 13 is a flowchart illustrating a method of predicting a signal-to-interference-plus noise ration associated with at least one of a plurality of communication links according to an example of the present invention.

DETAILED DESCRIPTION OF THE INVENTION

Reference will now be made in detail to the present examples of the invention, examples of which are illustrated in the accompanying drawings. Wherever possible, the same reference numbers will be used throughout the drawings to refer to the same or like parts.

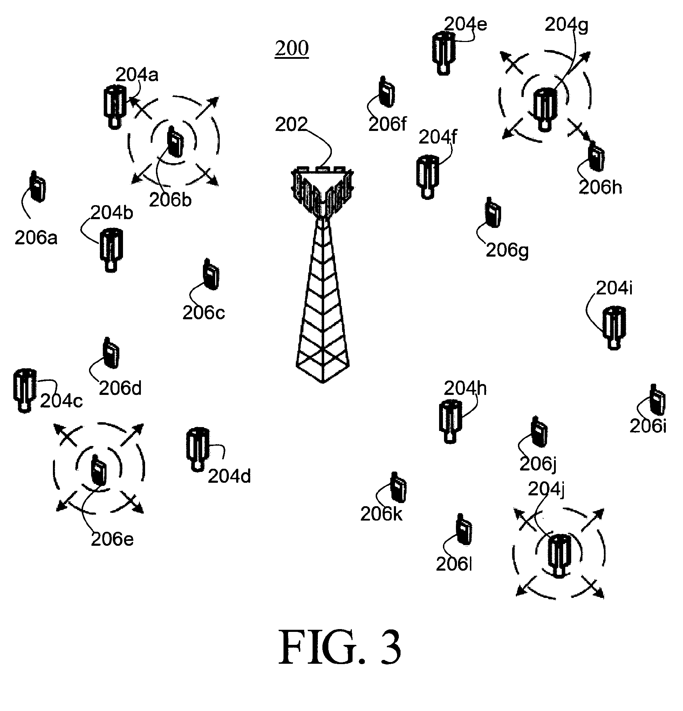

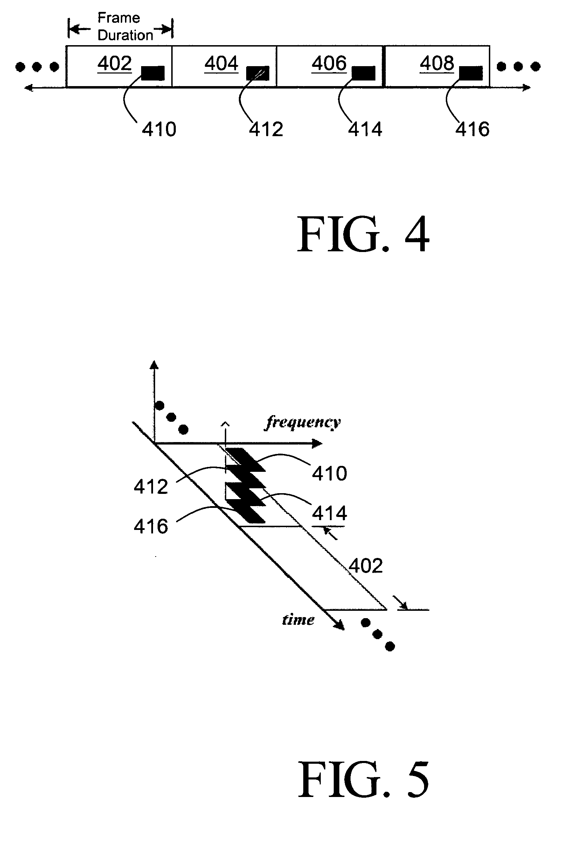

FIG. 3 is a diagram illustrating a measuring method according to an example of the present invention. Referring to FIG. 3, a radio relay cell (not numbered) in a radio relay network may include a base station (BS) 202, a plurality of relay stations such as relay stations 204a, 204b, 204c, 204d, 204e, 204f, 204g, 204h, 204i and 204j, and a plurality of mobile stations such as mobile stations 206a, 206b, 206c, 206d, 206e, 206f, 206g, 206h, 206i, 206j, 206k, and 2061. The radio relay network may designate a time-frequency region (as shown in FIG. 4), such as a transmission space limited to specific timing and a transmission frequency, for one or more stations to transmit signals for measuring over the same time-frequency region with one or more or all other stations by measuring the signals received over the same time-frequency region. In this example, the relay stations 204g may be requested by the radio relay network or the base station 202 to transmit the signals to the mobile station 206h or 206g, or the relay stations 204e or 204f. The signals may be measured by the stations 206h, 206g, 204e or 204f for measuring the signal quality such as the interference, SINR, the received signal strength indicator (RSSI) or the carrier to interference plus noise ratio (CINR), and reporting measuring results of the signal quality to the relay station 204g. The relay station 204g may then pass the signal quality measuring results to the base station 202. Similarly, the relay stations 204j may also be requested by the radio relay network or the base station 202 to transmit the signals to the mobile station 206j or 2061, the mobile station 206b may also be requested by the radio relay network or the base station 202 to transmit the signals to the relay stations 204a or 204b or the mobile station 206c, or the mobile station 206e may be requested by the radio relay network or the base station 202 to transmit the signals to the relay stations 204c or 204d or the mobile station 206d for the same purpose. In another example, there may be an instruction message generated by the base station 202 for instructing a station in the cell to perform scanning for other stations in neighborhood as a neighborhood discovery. After the neighborhood discovery, the base station 202 may instruct the station to transmit the signals to stations in its neighborhood for doing the measurement of the signal quality.

In one example, the signals may include a test signal, a reference signal or an actual signal with data. In other examples, if the signals transmitted by relay stations 204g or 204j or mobile stations 206b or 206e do not contain identifications (IDs) of these stations so that the receiving station may not be capable of identifying the transmitter from the signals received, then the radio relay network may designate non-overlapping time-frequency regions for separate transmitting stations to transmit their signals.

FIG. 4 is a diagram illustrating a method of applying a designated time-frequency regions 410, 412, 414 and 416 in frames 402, 404, 406 and 408, respectively, according to an example of the present invention. Referring to FIG. 4, if the received reference signals transmitted by the relay stations 204g or 204j or the mobile stations 206b or 206e are not associated to the identifications (IDs) of these stations, then a receiver side may not be capable of identifying the transmitters by the received reference signals. The radio relay network may designate non-overlapped time-frequency regions 410, 412, 414 and 416 for each of them to transmit the reference signals. That is, if the non-overlapped time-frequency region 410 in a frame duration 400 is designated to the relay station 204g, then even if the reference signal transmitted in the region 410 does not contain any information about the identification of the relay station 204g, the receiver side may still be capable of identifying the transmitter of the reference signal to be the relay station 204g by identifying which the station is authorized to transmit over the non-overlapped time-frequency region 410.

FIG. 5 is a diagram illustrating a method of applying the designated time-frequency region 410 for a station to transmit station-specific reference signals according to an example of the present invention. Referring to FIG. 5, if the reference signals transmitted by the relay stations 204g or 204j or the mobile stations 206b or 206e are specific for each station and associated to the ID of these stations, then the receiver side may be capable of identifying the transmitter from the received reference signal, and the radio relay network may be capable of designating the same time-frequency region for each of them to transmit the reference signals. That is, since the received reference signal contains the identification (ID) information about its transmitter, the radio relay network may not be necessary to arrange their transmitting in specific/different (non-overlapped) time-frequency regions. The measurement of the signal quality may therefore be done in a single frame duration (such as the duration before the first frame 402).

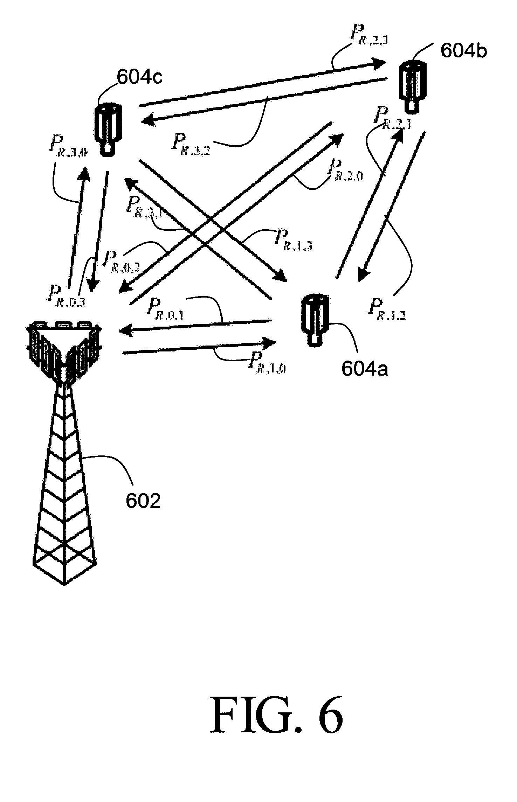

FIG. 6 is a diagram illustrating the interference and SINR prediction of a network (not numbered) for each possible resource reuse scenario according to an example of the present invention. Referring to FIG. 6, the network may include a base station 602 (said node 0) and relay stations 604a (said node 1), 604b (said node 2) and 604c (said node 3). According to the aforementioned measurement of the signal quality, each station may transmit a reference signal for other stations to perform the measurement and identification. Therefore, these stations may have knowledge on received signal strength (RSS) of the reference signal from each other. For example, the relay station 604a may receive reference signals from the base station 602 and the relay stations 604b and 604c, and thus may be capable of measuring the received signal strengths $P_{R,1,0}$, $P_{R,1,2}$ and $P_{R,1,3}$, respectively. Also, as the relay station 604a transmit its reference signal to the base station 602 and the relay stations 604b and 604c, the received signal strengths $P_{R,0,1}$, $P_{R,2,1}$ and $P_{R,3,1}$ related to its reference signal may be measured by the same measuring mechanism. Moreover, the received signal strengths $P_{R,3,0}$, $P_{R,0,3}$, $P_{R,3,2}$, $P_{R,2,3}$, $P_{R,2,0}$ and $P_{R,0,2}$ related to the relay stations 604c, 604c and the base station 602 may also be measured by the same mechanism.

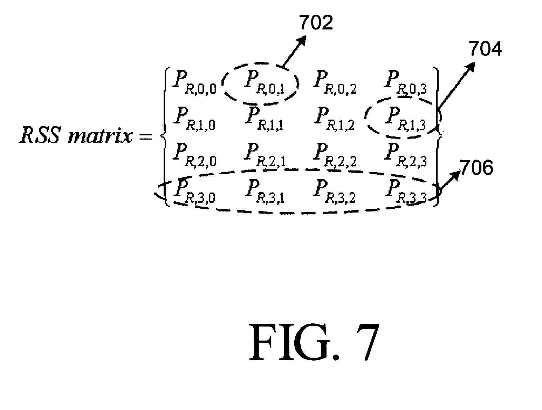

FIG. 7 is a diagram illustrating a set of RSS information in a radio relay network according to an example of the present invention. Referring to FIG. 7, the set of the RSS information may be represented as an RSS matrix, wherein an encircled part 702 means the received signal strength measured by the base station 602 (node 0) from the reference signal transmitted by the relay station 604a (node 1), another encircled part 704 means the received signal strength measured by the relay station 604a (node 1) from the reference signal transmitted by the relay station 604c (node 3), an encircled part 706 means the all received signal strengths reported by the relay station 604c (node 3), and so on.

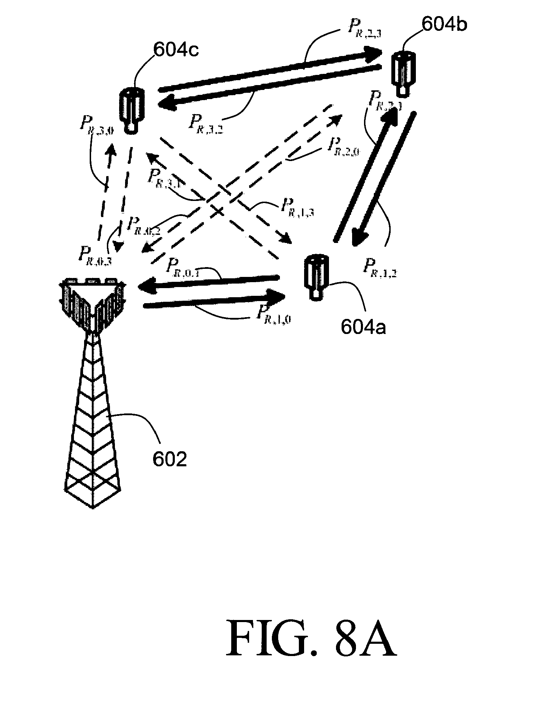

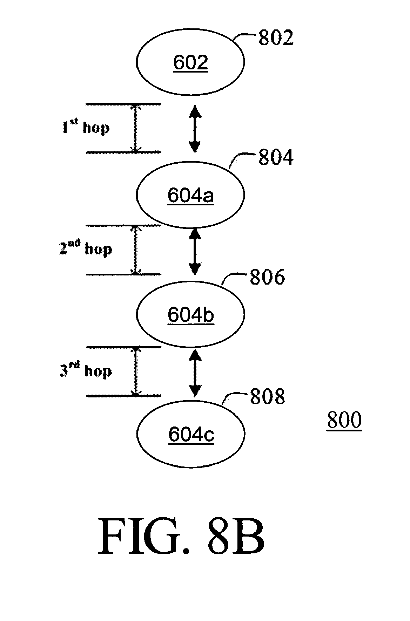

FIG. 8A is a diagram illustrating an interference and SINR prediction under a topology 800 (which is shown in FIG. 8B) according to an example of the present invention. FIG. 8B is a diagram illustrating the topology 800 in FIG. 8A. Referring to FIG. 8B, the topology 800 may have a scenario that a signal is transmitted from each of the base station 602, the relay stations 604a, 604b and 604c to its next station by a single hop (one hop). That is, a signal may be transmitted from said base station 602 to said relay station 604a by one hop, from said relay station 604a to said relay station 604b by another one hop and from said relay station 604b to said relay station 604c by still another one hop. Referring to FIG. 8A, the interference of received signal strengths may be measured in those paths with bold arrow lines. According to the RSS matrix shown in Figure 7, a coordinator may be capable of predicting the interference or SINR level for each resource reuse scenario and topology of the radio relay network. To predict the interference or SINR level of the topology 800, firstly define the $L_{ij}$ to indicate the radio link between node i and node j. Table. 1 shows the predicted interference and SINR level of the topology 800 based on the RSS matrix shown in FIG. 7 according to another example of the present invention, wherein node 0 in the network is the base station 602, node 1 in the network is the relay station 604a, node 2 in the network is the relay station 604b, node 3 in the network is the relay station 604c, UL means an uplink and DL means a downlink. Moreover, $\{L_{i,j}, L_{x,y}\}$ means that the link $L_{i,j}$ and the link $L_{x,y}$ may reuse the same radio resources to transmit different data over the same resource region, and each station may be assumed not to be able to transmit and receive signals at the same time. The prediction results may be represented in linear values (not in dB).

Table. 1 Predicted Interference and SINR Level of the topology 800 based on the RSS Matrix shown in FIG. 7

| Reuse Scenario | | Predicted Received Interference Level | | | |
|---|---|---|---|---|---|
| | | Node 0 | Node 1 | Node 2 | Node 3 |
| DL | $\{L_{0,1}\}, \{L_{1,2}\}, \{L_{2,3}\}$ | Null | $P_{R,1,1}$ | $P_{R,2,2}$ | $P_{R,3,3}$ |
| | $\{L_{0,1}, L_{2,3}\}, \{L_{1,2}\}$ | Null | $P_{R,1,2} + P_{R,1,1}$ | $P_{R,2,2}$ | $P_{R,3,0} + P_{R,3,3}$ |
| UL | $\{L_{3,2}\}, \{L_{2,1}\}, \{L_{1,0}\}$ | $P_{R,0,0}$ | $P_{R,1,1}$ | $P_{R,2,2}$ | Null |
| | $\{L_{1,0}, L_{3,2}\}, \{L_{2,1}\}$ | $P_{R,3,0} + P_{R,0,0}$ | $P_{R,1,1}$ | $P_{R,1,2} + P_{R,2,2}$ | Null |

| Reuse Scenario | | Predicted Received SINR Level | | | |
|---|---|---|---|---|---|
| | | Node 0 | Node 1 | Node 2 | Node 3 |
| DL | $\{L_{0,1}\}, \{L_{0,2}\}, \{L_{2,3}\}$ | Null | $\dfrac{P_{R,1,0}}{P_{R,1,1}}$ | $\dfrac{P_{R,2,1}}{P_{R,2,2}}$ | $\dfrac{P_{R,3,2}}{P_{R,3,3}}$ |
| | $\{L_{0,1}, L_{2,3}\} \{L_{1,2}\}$ | Null | $\dfrac{P_{R,1,0}}{P_{R,1,2} + P_{R,1,1}}$ | $\dfrac{P_{R,2,1}}{P_{R,2,2}}$ | $\dfrac{P_{R,3,2}}{P_{R,3,0} + P_{R,3,3}}$ |
| UL | $\{L_{3,2}\}, \{L_{2,1}\}, \{L_{1,0}\}$ | $\dfrac{P_{R,0,1}}{P_{R,0,0}}$ | $\dfrac{P_{R,1,2}}{P_{R,1,1}}$ | $\dfrac{P_{R,2,3}}{P_{R,2,2}}$ | Null |
| | $\{L_{1,0}, L_{3,2}\}, \{L_{2,1}\}$ | $\dfrac{P_{R,0,1}}{P_{R,0,3} + P_{R,0,0}}$ | $\dfrac{P_{R,1,2}}{P_{R,1,1}}$ | $\dfrac{P_{R,2,3}}{P_{R,2,0} + P_{R,2,2}}$ | Null |

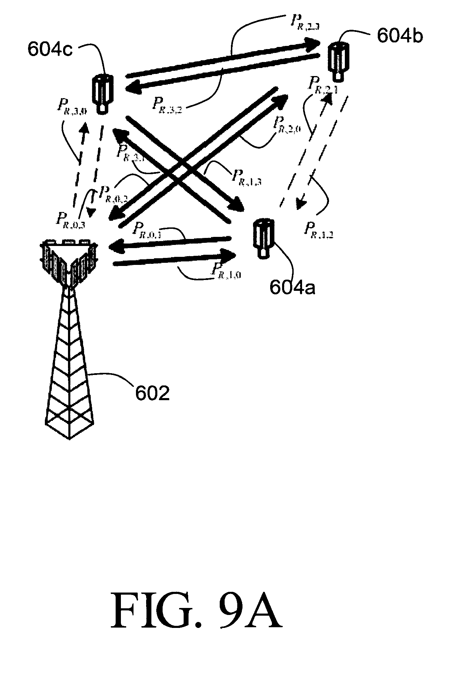

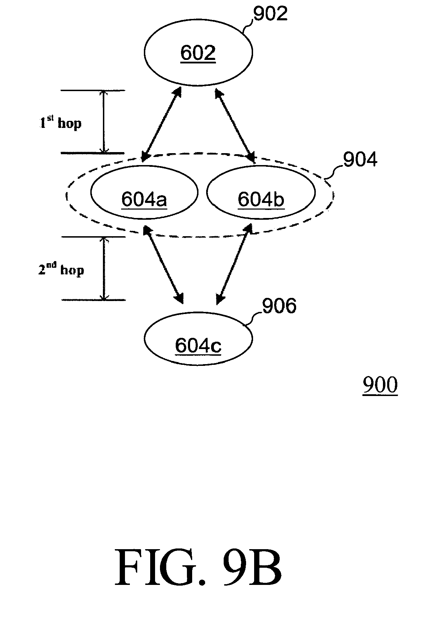

FIG. 9A is a diagram illustrating an interference and SINR prediction under a topology 900 (which is shown in FIG. 9B) according to another example of the present invention. FIG. 9B is a diagram illustrating the topology 900 in FIG. 9A. Referring to FIG. 9B, the relay stations 604a and 604b may transmit the same data over the same resource region so that they may act like a single station from a receiver's point of view (the receiver now is the relay station 604c). Therefore, relay stations 604a and 604b may be defined to be within the same cluster in the topology 900. Referring to FIG. 9A, the interference of received signal strengths may also be measured in those paths with bold arrow lines with the RSS matrix shown in Figure 7. Table. 2 shows the predicted interference and SINR level of the topology 900 based on the RSS matrix shown in FIG. 7 according to still another example of the present invention, wherein the notation $[L_{i,j}, L_{x,y}]$ is defined to represent that the links $L_{ij}$ and $L_{x,y}$ are transmitting the same data over the same resource region, so that the radio signals of both links are combined in the air from the receiver 604c's point of view. Moreover, links with transmitters located within the same cluster may be treated as one virtual link when performing resource reuse.

Table. 2 Predicted Interference and SINR Level of the topology 900 based on the RSS Matrix shown in FIG. 7

| Reuse Scenario | | Predicted Received Interference Level | | | |
| --- | --- | --- | --- | --- | --- |
| | | Node 0 | Node 1 | Node 2 | Node 3 |
| DL | $\{L_{0,1}\},\{L_{0,2}\}, \{[L_{1,3}, L_{2,3}]\}$ | Null | $P_{R,1,1}$ | $P_{R,2,2}$ | $P_{R,3,3}$ |
| UL | $\{L_{1,0}\},\{L_{2,0}\}, \{[L_{3,1}, L_{3,2}]\}$ | $P_{R,0,0}$ | $P_{R,1,1}$ | $P_{R,2,2}$ | Null |

| Reuse Scenario | | Predicted Received SINR Level | | | |
| --- | --- | --- | --- | --- | --- |
| | | Node 0 | Node 1 | Node 2 | Node 3 |
| DL | $\{L_{0,1}\},\{L_{0,2}\}, \{[L_{1,3}, L_{2,3}]\}$ | Null | $\dfrac{P_{R,1,0}}{P_{R,1,1}}$ | $\dfrac{P_{R,2,0}}{P_{R,2,2}}$ | $\dfrac{P_{R,3,1} + P_{R,3,2}}{P_{R,3,3}}$ |
| UL | $\{L_{1,0}\},\{L_{2,0}\}, \{[L_{3,1}, L_{3,2}]\}$ | $\dfrac{P_{R,0,1} + P_{R,0,2}}{P_{R,0,0}}$ | $\dfrac{P_{R,1,3}}{P_{R,1,1}}$ | $\dfrac{P_{R,2,3}}{P_{R,2,2}}$ | Null |

Therefore, when predicting the interference level based on the RSS matrix, the interference of specific receiver at node i may be the summation of:

    1. the thermal noise power and background interference power; and

    2. the received signal strengths of the stations which transmit over the same resource region but their receiver is not node i.

Moreover, when predicting the SINR level of specific receiver node *i* based on the RSS matrix and the aforementioned interference prediction results, the denominator of the SINR may be the aforementioned interference prediction result and the nominator of the SINR may be the RSS transmitted over the same resource region and their receiver is node *i*.

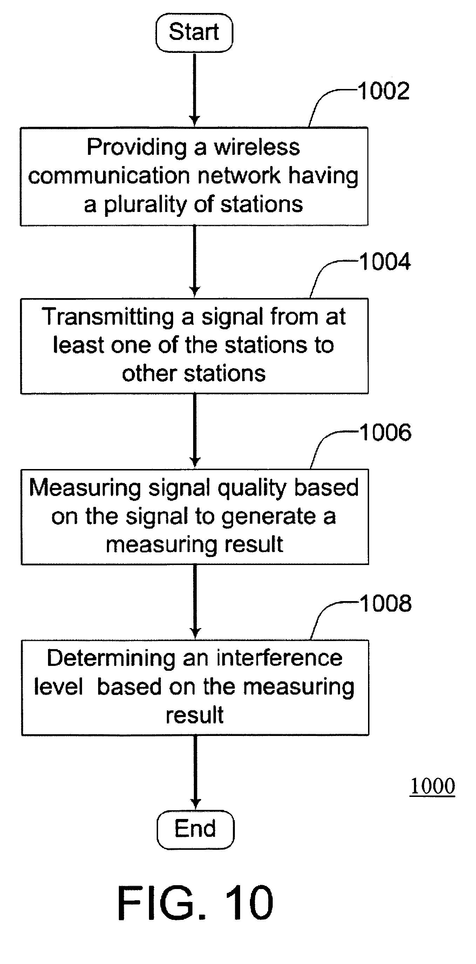

FIG. 10 is a flowchart illustrating a method 1000 of providing wireless communication according to an example of the present invention. Referring to FIG. 10, the method 1000 may include step 1002 providing a wireless communication network having a plurality of stations, step 1004 transmitting a signal from at least one of the stations to other stations, step 1006 measuring signal quality based on the signal to generate a measuring result and step 1008 determining an interference level based on the measuring result. In one example, the method 1000 may further comprise reporting measured results to a coordinator of the wireless communication network, wherein the coordinator may be at least one of base stations and relay stations in the wireless communication network. In another example, step 1008 may comprise determining a signal-to-interference-plus-noise ratio (SINR) associated with at least one of the communication links based on the measuring result. Moreover, the signal-to-interference-plus-noise ratio may include the nominator including the received signal strength at a receiving station from at least one other station whose transmission target is the receiving station, and the denominator including the interference level associated with the at least one of the communication links for the receiving station. In other example, the method 1000 may further comprise arranging a network topology or a network channel reuse scenario based on the measuring result. Furthermore, the signal may be a reference signal and the signal quality includes received signal strength (RSS). The wireless communication network may be a radio relay network. The measuring result may include received signal strengths measured by at least one of the other stations and corresponding station identifications (IDs). Moreover, a prediction of the interference level for a receiving station may include at least one of thermal noise, background interference, and received signal strength at the station from the other stations whose transmission target is not the station and are using a same communication channel as the station. In yet other example, the coordinator of the wireless communication network may manage a measurement procedure for at least a subset of the stations in the wireless communication network by designating the at least one of the stations to transmit the signal to other stations and designating the other stations to measuring the signal quality associated with at least one of the communication links based on the signal to generate the measuring result. The coordinator may request at least one of the stations to transmit different signals for measuring received signal strengths by at least one of the other stations.

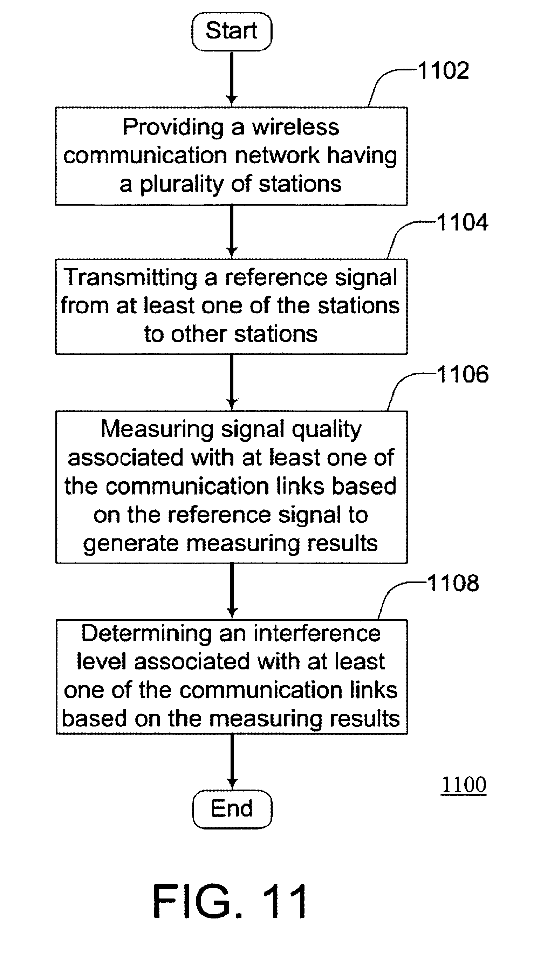

FIG. 11 is a flowchart illustrating a method 1100 of predicting transmission quality of wireless communication links according to an example of the present invention. Referring to FIG. 11, method 1100 may include step 1102 providing a wireless communication network having a plurality of stations, step 1104 transmitting a reference signal from at least one of the stations to other stations, step 1106 measuring signal quality associated with at least one of the communication links based on the reference signal to generate measuring results and step 1108 determining an interference level associated with at least one of the communication links based on the measuring results. Moreover, the plurality of stations may provide the communication links among the stations and each communication link may be between two of the plurality of stations. In one example, method 1100 may further comprise a step of identifying an identification of the at least one of the stations transmitting the reference signal.

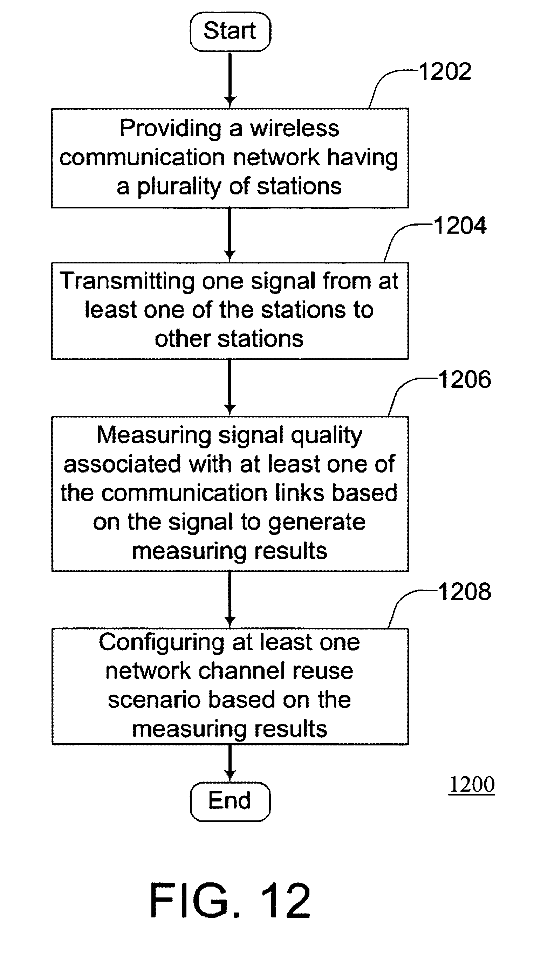

FIG. 12 is a flowchart illustrating a method 1200 of configuring reuse of radio communication links according to an example of the present invention. Referring to FIG. 12, method 1200 may include step 1202 providing a wireless communication network having a plurality of stations, step 1204 transmitting one signal from at least one of the stations to other stations, step 1206 measuring signal quality associated with at least one of the communication links based on the signal to generate measuring results and step 1208 configuring at least one network channel reuse scenario based on the measuring results, wherein the plurality of stations may provide the communication links among the stations and each communication link may be between two of the plurality of stations. In one example, the method 1200 may further comprise configuring a network topology based on the measuring results. In another example the method 1200 may further comprise determining an interference level associated with at least one of the communication links based on the measuring results.

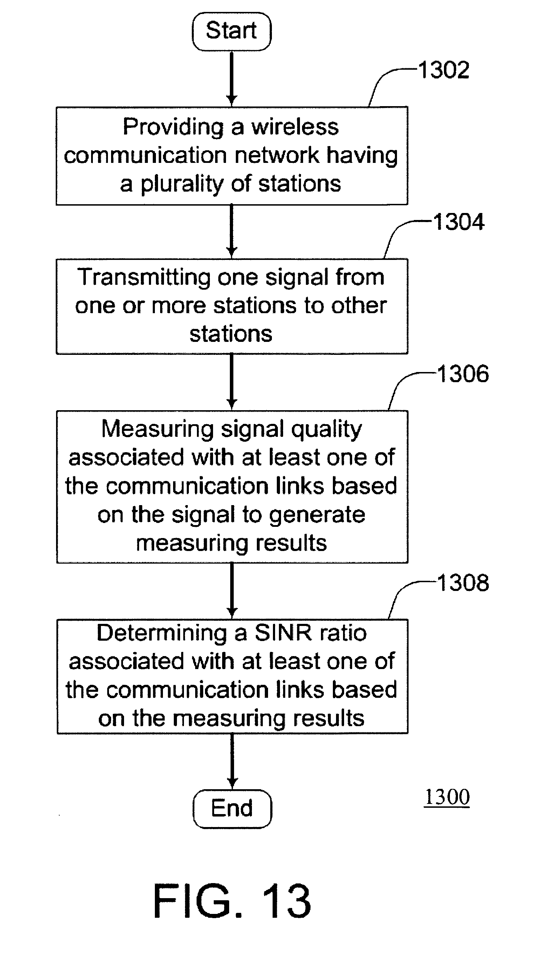

FIG. 13 is a flowchart illustrating a method 1300 of predicting a signal-to-interference-plus noise ration associated with at least one of a plurality of communication links according to an example of the present invention. Referring to FIG. 13, the method 1300 may include step 1302 providing a wireless communication network having a plurality of stations, step 1304 transmitting one signal from one or more of the stations to other stations, step 1306 measuring signal quality associated with at least one of the communication links based on the signal to generate measuring results and step 1308 determining a signal-to-interference-plus-noise ratio associated with at least one of the communication links based on the measuring results, wherein the plurality of stations may provide the communication links among them and each communication link may be between two of the plurality of stations. In one example, the method 1300 may further comprise determining an interference level associated with at least one of the communication links based on the measuring results. In another example, the signal-to-interference-and-noise ratio may be associated with at least one of the communication links is based on a ratio of a nominator and denominator, wherein the nominator may include the received signal strength at a receiving station from at least one other station whose transmission target is the station and the denominator may include an interference level associated with the at least one of the communication links for the receiving station. Moreover, the prediction of the interference level for a receiving station may include at least one of thermal noise, background interference, and received signal strength at the station from other stations whose transmission target is not the station and are using a same communication channel as the station.

It will be appreciated by those skilled in the art that changes could be made to the examples described above without departing from the broad inventive concept thereof. It is understood, therefore, that this invention is not limited to the particular examples disclosed, but it is intended to cover modifications within the spirit and scope of the present invention as defined by the appended claims.

Further, in describing representative examples of the present invention, the specification may have presented the method and/or process of the present invention as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process of the present invention should not be limited to the performance of their steps in the order written, and one skilled in the art can readily appreciate that the sequences may be varied and still remain within the spirit and scope of the present invention.

**Claims**

1.  A method of providing wireless communication, the method comprising:

    providing a wireless communication network having a plurality of stations, the plurality of stations having a plurality of communication links, each communication link being between two of the plurality of stations;
    transmitting a signal from at least one of the stations to other stations;
    measuring signal quality associated with at least one of the communication links based on the signal to generate a measuring result; and
    determining an interference level associated with at least one of the communication links based on the measuring result.

2.  The method of claim 1, further comprising reporting measured results to a coordinator of the wireless communication network, the coordinator being at least one of base stations and relay stations in the wireless communication network.

3.  The method of claim 1 or 2, wherein the determining an interference level associated with at least one of the communication links based on the measuring result comprises determining a signal-to-interference-plus-noise ratio (SINR) associated with at least one of the communication links based on the measuring result.

4.  The method of claim 3, wherein the determining a signal-to-interference-plus-noise ratio associated with at least one of the communication links based on the measuring result comprises determining a ratio of a nominator and a denominator, wherein
    the nominator includes the received signal strength at a receiving station from at least one other station whose transmission target is the receiving station; and
    the denominator includes the interference level associated with the at least one of the communication links for the receiving station.

5.  The method of any of claims 1 to 4, further comprising arranging a network topology or a network channel reuse scenario based on the measuring result.

6.  The method of any of claims 1 to 5, wherein the signal is a reference signal.

7.  The method of any of claims 1 to 6, wherein the signal quality includes received signal strength (RSS).

8.  The method of any of claims 2 to 7, wherein the coordinator of the wireless communication network manages a measurement procedure for at least a subset of the stations in the wireless communication network by designating the at least one of the stations to transmit the signal to other stations and designating the other stations to measuring the signal quality associated with at least one of the communication links based on the signal to generate the measuring result.

9.  The method of any of claims 1 to 8, wherein the wireless communication network is a radio relay network.

10. The method of claim 8 or 9, wherein the coordinator requests at least one of the stations to transmit different signals for measuring received signal strengths by at least one of the other stations.

11. The method of any of claims 1 to 10, wherein the measuring result includes received signal strengths measured by at least one of the other stations and corresponding station identifications (IDs).

12. The method of any of claims 1 to 11, wherein a prediction of the interference level for a receiving station includes at least one of thermal noise, background interference, and received signal strength at the station from the other stations whose transmission target is not the station and are using a same communication channel as the station.

13. A method of predicting transmission quality of wireless communication links, the method comprising:

    providing a wireless communication network having a plurality of stations, the plurality of stations providing the communication links among the stations, each communication link being between two of the plurality of stations;
    transmitting a reference signal from at least one of the stations to other stations;
    measuring signal quality associated with at least one of the communication links based on the reference signal to generate measuring results; and

determining an interference level associated with at least one of the communication links based on the measuring results.

14. The method of claim 13, further comprising identifying an identification of the at least one of the stations transmitting the reference signal.

15. A method of configuring reuse of radio communication links, the method comprising:

providing a wireless communication network having a plurality of stations, the plurality of stations providing the communication links among the stations, each communication link being between two of the plurality of stations;
transmitting one signal from at least one of the stations to other stations;
measuring signal quality associated with at least one of the communication links based on the signal to generate measuring results; and
configuring at least one network channel reuse scenario based on the measuring results.

16. The method of claim 15, further comprising configuring a network topology and radio parameters based on the measuring results.

17. The method of claim 15, further comprising determining an interference level associated with at least one of the communication links based on the measuring results.

18. A method of predicting a signal-to-interference-plus-noise ratio associated with at least one of a plurality of communication links, the method comprising:

providing a wireless communication network having a plurality of stations, the plurality of stations providing the communication links among them, each communication link being between two of the plurality of stations;
transmitting one signal from one or more of the stations to other stations;
measuring signal quality associated with at least one of the communication links based on the signal to generate measuring results; and
determining a signal-to-interference-plus-noise ratio associated with at least one of the communication links based on the measuring results.

19. The method of claim 18, further comprising determining an interference level associated with at least one of the communication links based on the measuring results.

20. The method of claim 18 or 19, wherein determining the signal-to-interference-and-noise ratio associated with at least one of the communication links is based on a ratio of a nominator and denominator, wherein
the nominator includes the received signal strength at a receiving station from at least one other station whose transmission target is the station; and
the denominator includes an interference level associated with the at least one of the communication links for the receiving station.

21. The method of claim 19 or 20, wherein a prediction of the interference level for a receiving station includes at least one of thermal noise, background interference, and received signal strength at the station from other stations whose transmission target is not the station and are using a same communication channel as the station.

**Uplink Cell Capacity (Mbps)**

Cell Throughput (Mbps)

5
4
3
2
1
0

102    104    106

# FIG. 1A

**Downlink Cell Capacity (Mbps)**

Cell Throughput (Mbps)

16
14
12
10
8
6
4
2
0

102    104    106

# FIG. 1B

FIG. 2 (Prior Art)

# FIG. 3

# FIG. 4

# FIG. 5

FIG. 6

$$RSS\ matrix = \begin{Bmatrix} P_{R,0,0} & P_{R,0,1} & P_{R,0,2} & P_{R,0,3} \\ P_{R,1,0} & P_{R,1,1} & P_{R,1,2} & P_{R,1,3} \\ P_{R,2,0} & P_{R,2,1} & P_{R,2,2} & P_{R,2,3} \\ P_{R,3,0} & P_{R,3,1} & P_{R,3,2} & P_{R,3,3} \end{Bmatrix}$$

702

704

706

# FIG. 7

FIG. 8A

1st hop
2nd hop
3rd hop

602 — 802
604a — 804
604b — 806
604c — 808

800

# FIG. 8B

FIG. 9A

FIG. 9B

Start

1002

Providing a wireless
communication network having
a plurality of stations

1004

Transmitting a signal from at
least one of the stations to
other stations

1006

Measuring signal quality based
on the signal to generate a
measuring result

1008

Determining an interference
level based on the measuring
result

1000

End

# FIG. 10

Start

1102

Providing a wireless
communication network having
a plurality of stations

1104

Transmitting a reference signal
from at least one of the stations
to other stations

1106

Measuring signal quality
associated with at least one of
the communication links based
on the reference signal to
generate measuring results

1108

Determining an interference
level associated with at least
one of the communication links
based on the measuring results

End

1100

# FIG. 11

Start

1202

Providing a wireless
communication network having
a plurality of stations

1204

Transmitting one signal from at
least one of the stations to
other stations

1206

Measuring signal quality
associated with at least one of
the communication links based
on the signal to generate
measuring results

1208

Configuring at least one
network channel reuse
scenario based on the
measuring results

End

1200

# FIG. 12

Start

—1302

Providing a wireless
communication network having
a plurality of stations

—1304

Transmitting one signal from
one or more stations to other
stations

—1306

Measuring signal quality
associated with at least one of
the communication links based
on the signal to generate
measuring results

—1308

Determining a SINR ratio
associated with at least one of
the communication links based
on the measuring results

End

1300

# FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6694141 B
- US 6597671 B
- US 6253086 B